# EUROPÄISCHE PATENTSCHRIFT

(11) **EP 2 807 302 B1**
(45) Veröffentlichungstag und Bekanntmachung des Hinweises auf die Patenterteilung: **25.05.2016**
(21) Anmeldenummer: 13701077.3
(22) Anmeldetag: 23.01.2013
(51) Int. Cl.: D06B 3/04, B29B 15/14, B29B 15/12, D01D 5/096

(54) **VORRICHTUNG ZUM BENETZEN MEHRERER FÄDEN**
DEVICE FOR WETTING MULTIPLE FILAMENTS
DISPOSITIF PERMETTANT D'HUMIDIFIER PLUSIEURS FILS

(30) Priorität: 24.01.2012 DE 102012001350
(43) Veröffentlichungstag der Anmeldung: 03.12.2014
(73) Patentinhaber: Oerlikon Textile GmbH & Co. KG, 42897 Remscheid (DE)
(72) Erfinder: SCHRÖTER, Michael, 42899 Remscheid (DE)
(74) Vertreter: Neumann, Ditmar
(86) Internationale Anmeldenummer: PCT/EP2013/051196
(87) Internationale Veröffentlichungsnummer: WO 2013/110633

(56) Entgegenhaltungen:
- WO-A1-03/060204
- WO-A1-2004/070092
- US-A- 3 893 412
- US-B1- 6 449 938
- US-B1- 6 814 807

## Beschreibung

Die Erfindung betrifft eine Vorrichtung zum Benetzen mehrerer Fäden gemäß dem Oberbegriff des Anspruchs 1.

Insbesondere bei der Herstellung von synthetischen multifilen Fäden ist es erforderlich, dass zur Führung und Behandlung der Fäden diese nach dem Spinnen mit einem Fluid benetzt werden. Das Fluid hat dabei im Wesentlichen die Aufgabe, die Vielzahl der den Faden bildenden Filamentstränge zusammenzuhalten und andererseits eine für den unmittelbaren Kontakt geeignete reibungsarme Oberfläche an dem Faden auszubilden. Da in dem Herstellungsprozess üblicherweise innerhalb einer Spinnposition mehrere Fäden als eine Fadengruppe hergestellt werden, ist es ebenfalls üblich, die Fäden der Fadengruppe parallel nebeneinander mit einem Fluid zu benetzen. Hierbei sind im Stand der Technik zwei unterschiedliche Vorrichtung zum Benetzen der Fäden bekannt.

Bei einer ersten gattungsgemäßen Vorrichtung, von der die Erfindung ausgeht, werden die Fäden separat durch eine Mehrzahl von einzelnen Benetzungsmitteln mit einer dosierten Menge des Fluids benetzt. Das Fluid wird dabei den Benetzungsmitteln durch eine Dosiereinrichtung mit einer Mehrzahl von Dosiermitteln zugeführt, so dass an jedem der Benetzungsmitteln eine zum Benetzen des jeweiligen Fadens dosierte Fluidmenge zur Verfügung steht. Eine derartige Vorrichtung ist beispielsweise aus der DE 24 33 507 bekannt.

Bei der bekannten Vorrichtung besteht das Problem, dass die Benetzungsmittel aufgrund der Beschaffenheit und der Anschlüsse der Dosiermittel einen Mindestabstand erfordern, so dass die Führung der Fadenschar mit einem durch die Benetzungsmittel definierten Abstand zu führen sind. Bei den heute üblichen Herstellungsverfahren und synthetischen Fäden werden die Fäden bevorzugt jedoch möglichst mit geringem Fadenabstand nebeneinander geführt, um kompakte Behandlungsaggregate wie beispielsweise kurze Galetten zu erhalten. Derartige kurze Fadenabstände, die im Bereich von wenigen Millimetern liegen könnten, lassen sich bei der gattungsgemäßen Vorrichtung nur dadurch realisieren, dass die Benetzungsmittel in einer versetzten Anordnung hintereinander gehalten werden. Damit sind aufwändige und großvolumige Einbauten in den Schmelzspinnanlagen erforderlich. Zudem werden die Fäden in ihren Fadenläufen an unterschiedlichen Orten zu unterschiedlichen Zeiten benetzt, was zu unerwünschten Eigenschaftsveränderungen der Fäden führen könnte.

Aus dem Stand der Technik sind jedoch auch derartige Vorrichtungen zum Benetzen bekannt, bei welcher die Fäden als eine Fadenschar durch ein Benetzungsmittel benetzt werden. Eine derartige Vorrichtung geht beispielsweise aus der DE 199 45 699 A1 hervor. Hierbei werden die Fäden zum Auftragen einer dosierten Fluidmenge gemeinsam über eine benetzte poröse Oberfläche geführt, die mit einem Dosiermittel gekoppelt ist. Derartige Vorrichtungen sind jedoch nur bedingt geeignet, um eine definierte Menge pro Faden abzugeben. Hierbei ist die Menge des Fluids, die von dem Faden aufgenommen wird, im wesentlichen von der Verteilung des Fluids an der Oberfläche des jeweiligen Benetzungsmittels abhängig. Insoweit ist eine definierte Einzelbenetzung der Fäden nicht möglich.

Weitere Benetzungsanordnungen sind aus den US 3893412 und US 6449938 bekannt.

Es ist daher Aufgabe der Erfindung, eine der eingangs genannten Vorrichtung zum Benetzen mehrerer Fäden mit mehreren Benetzungsmitteln derart auszubilden, dass eine Fadenschar mit mehreren Fäden auch bei geringen Fadenabständen an einem Ort raumsparend benetzbar ist.

Ein weiteres Ziel der Erfindung liegt darin, die gattungsgemäße Vorrichtung zum Benetzen mehrere Fäden derart zu verbessern, dass die zwischen den Benetzungsmittel und den Dosiermitteln eingeschlossene Menge eines Fluids möglichst gering gehalten werden kann.

Diese Aufgabe wird erfindungsgemäß dadurch gelöst, dass die Dosiermittel durch mehrere Zahnradpaarungen gebildet sind, die sandwichartig in einem Pumpenblock angeordnet sind und dass die Benetzungsmittel an einer Trägerplatte angeordnet sind, welche Trägerplatte an dem Pumpenblock gehalten ist.

Vorteilhafte Weiterbildungen der Erfindung sind durch die Merkmale und Merkmalskombinationen der jeweiligen Unteransprüche definiert.

Die Erfindung zeichnet sich dadurch aus, dass die Benetzungsmittel und die Dosiermittel zu einer Baueinheit verbunden sind, so dass eine direkte Kopplung zwischen Benetzungsmittel und Dosiermittel möglich ist. An jedem der Benetzungsmittel lässt sich eine durch das jeweilige zugeordnete Dosiermittel definierte Menge des Fluids ohne wesentliche Verzögerung bereitstellen, so dass eine gleichmäßige Benetzung der Fäden gewährleistet ist. Insbesondere die bei größeren Leitungsverbindungen nach Prozessunterbrechungen auftretenden Lufteinschlüsse lassen sich durch die kompakte Anordnung und den kurzen Anwendungen zwischen den Benetzungsmitteln und den Dosiermitteln völlig vermeiden.

Um eine möglichst kompakte auf die üblichen Fadenabstände bei der Herstellung von synthetischen Fäden abgestimmte Anordnung der Benetzungsmittel und der Dosiermittel zu erhalten, ist die Weiterbildung der Erfindung besonders vorteilhaft, bei welcher die Benetzungsmittel mit einem Fadenabstand zueinander an der Trägerplatte angeordnet sind und bei welcher die Zahnradpaarungen eine gleichgroße Zahnbreite aufweisen, die kleiner ist als der Fadenabstand. Damit lassen sich die Dosiermittel innerhalb der durch die Fadenabstände vorgegebene Teilung der Benetzungsmittel anordnen. Zudem führt die gleichgroße Zahnbreite aller Zahnpaarungen dazu, dass an jedem der Benetzungsmittel eine gleichgroße dosierte Menge eines Fluids zu Auftragen auf den betreffenden Faden ansteht.

Die Anordnung der Benetzungsmittel und der Dosiermittel innerhalb der Vorrichtung wird bevorzugt derart gewählt, dass der Fadenabstand zwischen den Benetzungsmitteln eine Größe von <10 mm aufweist.

Bei derart geringen Fadenabständen haben sich insbesondere die Benetzungsmittel bewährt, die jeweils eine Benetzungsnut und einen in einem Nutgrund der Benetzungsnut mündenden Dosierkanal aufweisen, wobei der Dosierkanal direkt mit einem Druckraum eines der Zahnradpaarungen verbunden ist. So ist eine sichere Fadenführung während der Benetzung auch bei geringen Fadenabständen möglich.

Damit innerhalb der Fadenschar jeder Faden eine identische Historie in dem Herstellungsprozess erhält, ist die Weiterbildung der Erfindung besonders bevorzugt verwendet, bei welcher die Benetzungsnuten und die Dosierkanäle der Benetzungsmittel identisch ausgebildet sind. So lassen sich die Führungen, die Kontaktreibungen und die Verteilung der Flüssigkeit an dem Faden an jedem Benetzungsmittel identisch ausbilden.

Um möglichst die zwischen den Benetzungsmitteln und den Dosiermitteln eingeschlossene Totmenge des Fluids gering zu halten, ist die Weiterbildung der Erfindung vorgesehen, bei welcher die Benetzungsnuten der Benetzungsmittel in die Trägerplatte ausgebildet sind, wobei die Dosierkanäle die Trägerplatte bis zu einer Anschlussseite des Pumpenblocks durchdringen.

Alternativ besteht jedoch auch die Möglichkeit, dass die Benetzungsnuten der Benetzungsmittel in einem oder mehreren Keramikeinsätzen gebildet sind, der oder die an der Trägerplatte gehalten ist oder sind, wobei die Dosierkanäle innerhalb der Trägerplatte durch separate Zuführkanäle mit den Druckräumen der Zahnradpaarungen verbunden sind. Wesentlich hierbei ist, dass die zwischen der Trägerplatte und dem Pumpenblock gebildete Trennfuge unmittelbar zum Anschluss der Benetzungsmittel an dem Dosiermitteln genutzt wird.

Um die Mengen des Fluids, die pro Faden dosiert aufgetragen werden sollen, einstellen zu können, ist die Weiterbildung er Erfindung vorgesehen, bei welcher die Zahnradpaarungen innerhalb des Pumpenblocks durch eine gemeinsame Antriebswelle antreibbar ausgebildet sind. So lässt sich an jedem der Zahnradpaarungen eine identische Fördermenge einstellen.

Die Antriebswelle ist hierzu vorzugsweise außerhalb des Pumpenblocks mit einem elektrischen Antrieb gekoppelt. Hierbei können je nach Größe der gewünschten Fördermenge die Antriebswelle direkt mit einem elektrischen Motor oder über ein Übersetzungsgetriebe mit einem Schrittmotor gekoppelt werden.

Die Einspeisung des Fluids erfolgt vorteilhaft durch einen zentralen Saugkanal innerhalb des Pumpenblockes, der gemäß einer vorteilhaften Weiterbildung der Erfindung mit mehreren den Zahnradpaarungen zugeordneten Saugkammern verbunden ist. Der Saugkanal ist an einem Ende des Pumpenblockes mit einer Zulaufleitung gekoppelt, so dass jedes der Zahnradpaarungen direkt mit der Zulaufleitung verbunden ist.

Der Pumpenblock zur Aufnahme der Dosiermittel ist gemäß einer vorteilhaften Weiterbildung der Erfindung bevorzugt aus mehreren Gehäuseplatten und mehreren Zahnradplatten gebildet, die druckdicht gegeneinander gehalten sind. Damit lassen sich auch eine größere Anzahl von Dosiermitteln druckdicht auf einfache Art und Weise zu einem Pumpenblock kombinieren. Die Anzahl der Benetzungsmittel und die Anzahl der Dosiermittel könnte dabei durch einfache Umbauten der erfindungsgemäßen Vorrichtung flexibel gestaltet werden.

Um bei der Benetzung einer Fadenschar möglichst noch geringere Fadenabstände zu realisieren, ist die Weiterbildung der Erfindung bevorzugt ausgeführt, bei welcher die Zahnradpaarungen durch mehrere Planetenradzahnradanordnungen gebildet sind, wobei eine der Planetenzahnradanordnung einem der Benetzungsmittel oder mehreren Benetzungsmitteln zugeordnet ist. So lassen sich mehrere Zahnradpaarungen in einer Ebene realisieren, die vorzugsweise mit mehreren Benetzungsmitteln gekoppelt ist. Jede der Zahnradpaarungen erzeugen einen identischen Dosierstrom.

Die Verteilung der Dosierströme wird hierzu vorteilhaft durch eine Verteilerplatte mit mehreren Verteilnuten ausgeführt, die gemäß einer vorteilhaften Weiterbildung der Erfindung zwischen dem Pumpenblock und der Trägerplatte angeordnet ist. Damit können die am Pumpenblock in einer Ebene angeordneten Dosierkanäle mit mehreren außerhalb der Ebene angeordneten Benetzungsmitteln verbunden werden.

Damit bei einer Mehrzahl von sandwichartig angeordneten Planetenzahnradanordnungen alle Zahnradpaarungen identische Dosierströme erzeugen können, ist die Weiterbildung der Erfindung bevorzugt ausgeführt, bei welcher die Planetenzahnradanordnungen jeweils ein Sonnenrad aufweisen, die gemeinsam über eine Antriebswelle antreibbar sind. Dabei sind dem Sonnenrad mehrere Planetenräder zugeordnet.

Zur weiteren Erläuterung der Erfindung werden nachfolgend mehrere Ausführungsbeispiele der erfindungsgemäßen Vorrichtung unter Bezug zu den beigefügten Figuren näher erläutert.

Es stellen dar:
- Fig. 1: schematisch eine Draufsicht auf ein erstes Ausführungsbeispiel der erfindungsgemäßen Vorrichtung
- Fig. 2: schematisch eine Seitenansicht des Ausführungsbeispiels aus Fig. 1
- Fig. 3: schematisch eine Querschnittansicht des Ausführungsbeispiels nach Fig. 1
- Fig. 4: schematisch eine Draufsicht auf ein weiteres Ausführungsbeispiel der erfindungsgemäßen Vorrichtung
- Fig. 5: schematisch eine Querschnittansicht des Ausführungsbeispiels aus Fig. 4
- Fig. 6: schematisch eine Querschnittanordnung eines weiteren Ausführungsbeispiels der erfindungsgemäßen Vorrichtung

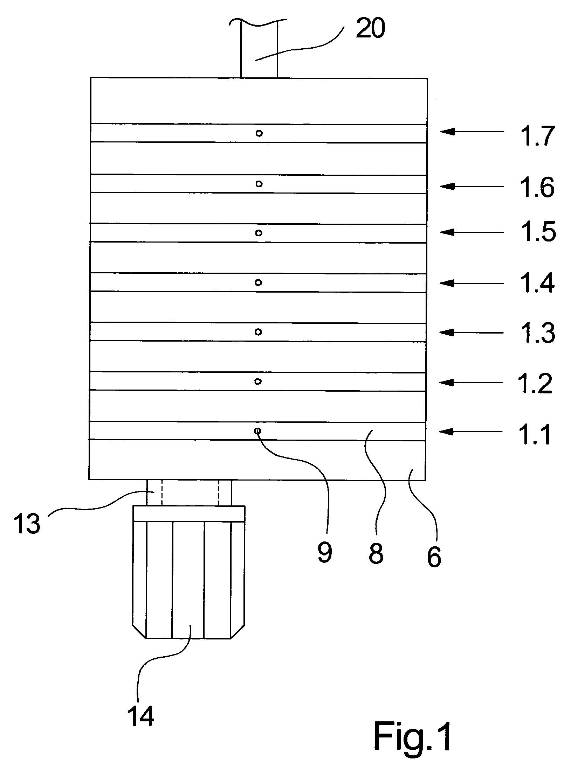

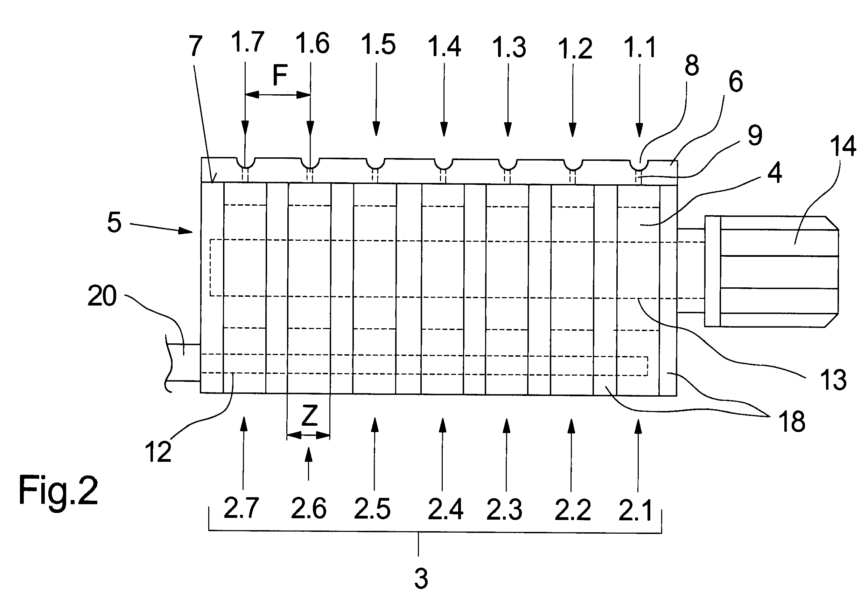

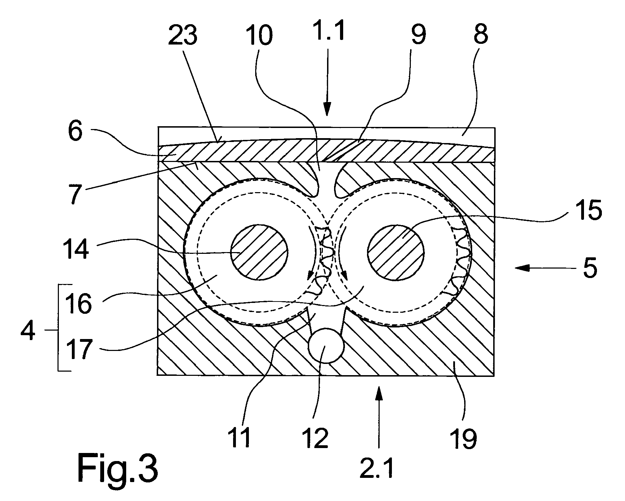

In den Fig. 1, 2 und 3 ist ein erstes Ausführungsbeispiel der erfindungsgemäßen Vorrichtung in mehreren Ansichten dargestellt. In der Fig. 1 ist das Ausführungsbeispiel in einer Draufsicht, in Fig. 2 in einer Seitenansicht und in Fig. 3 in einer Querschnittansicht gezeigt. Insoweit kein ausdrücklicher Bezug zu einer der Figuren gemacht ist, gilt die nachfolgende Beschreibung für alle Figuren.

Die Vorrichtung weist an einer Oberseite einer Trägerplatte 6 mehrere Benetzungsmittel 1.1 bis 1.7 auf, die nebeneinander angeordnet sind. Die Benetzungsmittel 1.1 bis 1.7 sind identisch ausgeführt und werden nachfolgend noch näher erläutert.

An einer unteren Anschlussseite 7 der Trägerplatte 6 ist eine Dosiereinrichtung 3 vorgesehen, die mehrere den Benetzungsmitteln 1.1 bis 1.7 zugeordnete Dosiermittel 2.1 bis 2.7 aufweist. Die Dosiermittel 2.1 bis 2.7 sind ebenfalls identisch ausgebildet und werden gemeinsam mit dem Benetzungsmittel 1.1 bis 1.7 anhand der Querschnittsdarstellung nach Fig. 3 näher erläutert.

Jedes der Dosiermittel 2.1 und 2.7 weist ein Zahnradpaar 4 auf. In der Darstellung in Fig. 3 zeigt der Querschnitt das Benetzungsmittel 1.1 und das zugeordnete Dosiermittel 2.1, so dass die dargestellte Zahnradpaarung 4 das Dosiermittel 2.1 bildet. Die Zahnradpaarung 4 ist innerhalb eines Pumpenblockes 5 angeordnet, wobei die Zahnradpaarung 4 durch ein Antriebsrad 16 und ein Treibrad 17 gebildet wird. Das Treibrad 17 ist über einen Lagerzapfen 15 in dem Pumpenblock 5 drehbar gelagert. Das Antriebsrad 16 ist mit einer Antriebswelle 14 gekoppelt, die ebenfalls in dem Pumpenblock 5 gelagert ist.

Der Zahnradpaarung 4 ist in dem Pumpenblock 5 in einem der Anschlussseite 7 zugewandten oberen Bereich ein Druckraum 10 und gegenüberliegend zu der Zahnradpaarung 4 ein Saugraum 11 zugeordnet. Der Saugraum 11 ist mit einem Saugkanal 12 verbunden. Der Druckraum 10 ist zur Ausschlussseite 7 hin offen und bildet so einen Förderauslass des Dosiermittels 2.1.

Der Pumpenblock 5 ist direkt über die Anschlussseite 7 mit der Trägerplatte 6 verbunden. An der Trägerplatte 6 ist das Benetzungsmittel 1.1 ausgebildet. Das Benetzungsmittel 1.1 weist in diesem Ausführungsbeispiel eine längliche Benetzungsnut 8 auf, die in diesem Ausführungsbeispiel an der Oberseite der Trägerplatte 6 ausgebildet ist und sich über die gesamte Breite der Trägerplatte 6 erstreckt. Der Nutgrund 23 der Benetzungsnut 8 ist gewölbt ausgeführt, um einen Faden mit Kontakt am Nutgrund 23 zu führen. In den Nutgrund 23 mündet ein Dosierkanal 9, der sich innerhalb der Trägerplatte 6 bis zur Anschlussseite 7 hin erstreckt. Der Dosierkanal 9 ist so direkt mit dem Druckraum 10 des Dosiermittels 2.1 verbunden.

Zum Auftragen einer dosierten Menge eines Fluids, das beispielsweise durch eine Öl-Wasser-Emulsion gebildet sein könnte, wird über die Antriebswelle 13 das Antriebsrad 16 in der dargestellten Drehrichtung angetrieben. Ein durch die Drehzahl des Zahnradpaares 4 und der Zahngeometrie definierte Fördermenge gelangt dabei aus dem Saugraum 11 in den Druckraum 10. Über den Druckraum 10 wird das Fluid in den Dosierkanal 9 geleitet und tritt am Nutgrund 23 der Benetzungsnut 8 aus. Innerhalb der Benetzungsnut 8 wird ein Faden geführt, der kontinuierlich das Fluid aufnimmt. Zur Verteilung des Fluids an dem Faden besteht auch die Möglichkeit, dass in dem Nutgrund 23 mehrere Nuten eingelassen sind, die insbesondere bei höheren Fadengeschwindigkeiten zu einer vergleichmäßigten Verteilung und Benetzung des Fadens führen.

Das in Fig. 3 dargestellte Benetzungsmittel 1.1 und Dosiermittel 2.1 sind beispielhaft für die nebeneinander ausgebildeten benachbarten Benetzungsmittel 1.2 bis 1.7 und Dosiermittel 2.2 bis 2.7 beschrieben. Der Aufbau der übrigen Benetzungsmittel 1.2 bis 1.7 und Dosiermittel 2.2 bis 2.7 ist identisch, so dass hierzu keine weitere Beschreibung erfolgt.

Wie aus den Darstellungen in Fig. 2 hervorgeht, sind die Zahnradpaarungen 4 der Dosiermittel 2.1 bis 2.7 sandwichartig in den Pumpenblock 5 angeordnet. Hierbei wird der Pumpenblock 5 durch mehrere abwechselnd zusammengefügte Gehäuseplatten 18 und Zahnradplatten 19 gebildet. Dabei ist jeweils eine Zahnradplatte 19 zwischen zwei Gehäuseplatten 18 gehalten, um eine Zahnradpaarung 4 eines der Dosiermittel 2.1 bis 2.7 zu führen. Die Gehäuseplatten 18 und Zahnradplatten 19 sind druckdicht miteinander verbunden.

Aus der Darstellung in Fig. 2 lässt sich desweiteren entnehmen, dass die Antriebswelle 13 innerhalb des Pumpenblocks 5 mit allen Zahnradpaarungen 4 der Dosiermittel 2.1 bis 2.7 verbunden ist. Hierzu ist die Antriebswelle 13 gestrichelt dargestellt. An einem Ende außerhalb des Pumpenblocks 5 ist die Antriebswelle 5 mit einem Antrieb 14 gekoppelt, durch welchen die Antriebsdrehzahlen der Zahnradpaarungen 4 bestimmt sind. Der Antrieb 14 ist in diesem Ausführungsbeispiel durch einen Elektromotor dargestellt. Grundsätzlich besteht jedoch auch die Möglichkeit, dass der elektrische Antrieb der Antriebswelle 13 über ein Übersetzungsgetriebe erfolgt.

Auf der gegenüberliegenden Seite zu dem Antrieb 14 ist an dem Pumpenblock 5 eine Zulaufleitung 20 angeschlossen, die mit dem Saugkanal 12 verbunden ist. Der Saugkanal 12 ist in der Fig. 2 gestrichelt dargestellt und erstreckt sich ebenfalls über alle Zahnradpaarungen 4 der Dosiermittel 2.1 bis 2.7.

An der Oberseite der Trägerplatte 6, die direkt mit dem Pumpenblock 5 gekoppelt ist, sind die Benetzungsnuten 8 der Benetzungsmittel 1.1 bis 1.7 in einem Abstand zueinander parallel verlaufend angeordnet. Der Abstand ist in Fig. 2 mit dem Kennbuchstaben F dargestellt und für jeden der Benetzungsmittel 1.1 bis 1.7 identisch. Der Abstand F bildet den sogenannten Fadenabstand, mit welchem die Fäden parallel nebeneinander zum Benetzen geführt werden. Der Fadenabstand ist vorzugsweise in einer Größe ausgeführt, die kleiner ist als 10 mm.

Um dennoch jeden der Benetzungsnuten 8 der Benetzungsmittel 1.1 bis 1.7 gleichmäßig mit einem dosierten Fluid zu befüllen, sind die Zahnradpaare 4 der Dosiermittel 2.1 bis 2.7 mit einer gleichgroßen Zahnbreite ausgeführt. Die Zahnbreite eines der Zahnradpaare 4 ist in Fig. 2 eingezeichnet und mit dem Bezugszeichen Z versehen. Die Zahnbreite Z ist in diesem Ausführungsbeispiel kleiner als der Fadenabstand F. Damit ist eine sehr kompakte Anordnung der Benetzungsmittel 1.1 bis 1.7 und der Dosiermittel 2.1 bis 2.7 möglich.

Im Betrieb werden alle Zahnradpaarungen 4 der Dosiermittel 2.1 bis 2.7 gemeinsam durch den Antrieb 14 und die Antriebswelle 13 angetrieben. An jedem der Dosiermittel 2.1 bis 2.7 wird so ein identischer Förderstrom des Fluids erzeugt, der über die jeweiligen Dosierkanäle 9 in die Benetzungsnuten 8 der Benetzungsmittel 1.1 bis 1.7 mündet.

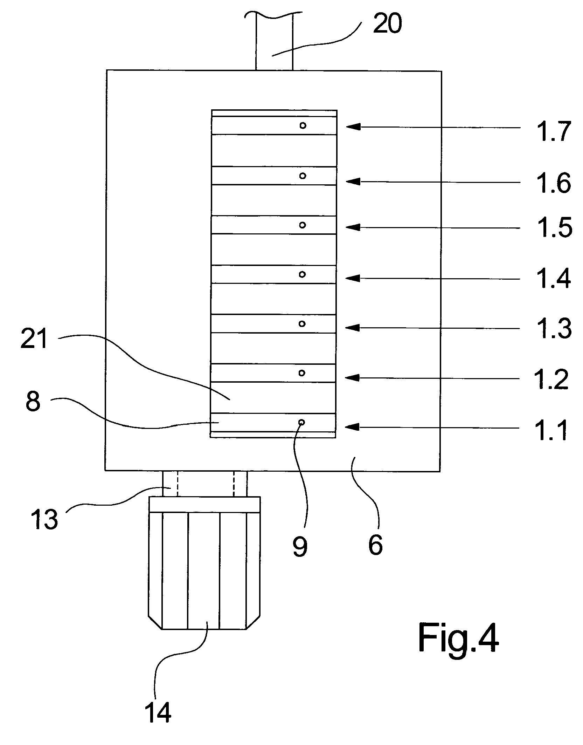

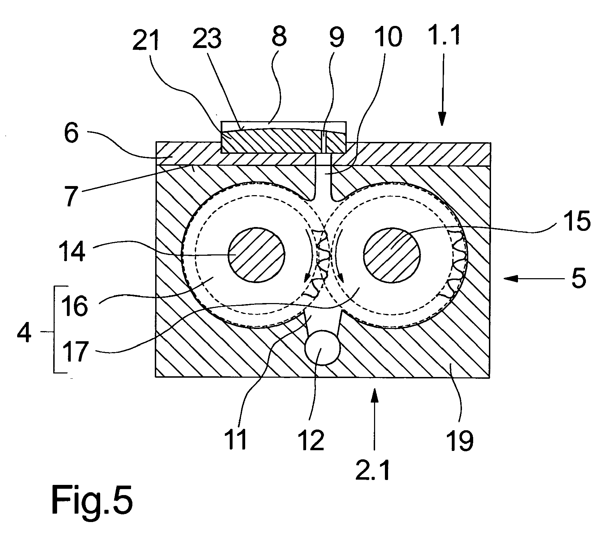

Die Ausbildung der Benetzungsmittel 1.1 bis 1.7 ist in dem gezeigten Ausführungsbeispiel derart ausgeführt, dass eine hohe Integration innerhalb der Trägerplatte 6 möglich ist. Grundsätzlich besteht jedoch auch die Möglichkeit, die Benetzungsmittel 1.1 bis 1.7 durch separate zusätzliche Bauteile der Trägerplatte 6 zuzuordnen. Eine alternative Ausführung der erfindungsgemäßen Vorrichtung ist in den Fig. 4 und 5 dargestellt. In Fig. 4 ist das Ausführungsbeispiel in einer Draufsicht und in Fig. 5 in einer Querschnittansicht gezeigt.

Bei dem in Fig. 4 und 5 dargestellten Ausführungsbeispiel sind die Dosiermittel 2.1 bis 2.7 identisch zu dem vorgenannten Ausführungsbeispiel ausgebildet und werden somit nachfolgend nicht mehr näher erläutert. Gegenüber dem vorhergehenden Ausführungsbeispiel sind nur die Ausbildung der Benetzungsmittel 1.1 bis 1.7 unterschiedlicher Art.

Wie aus den Darstellungen in Fig. 4 und Fig. 5 hervorgeht, sind die Benetzungsmittel 1.1 bis 1.7 an einem Keramikeinsatz 21 angeordnet. Der Keramikeinsatz 21 ist an der Oberseite der Trägerplatte 6 gehalten und in diesem Fall einteilig ausgebildet. Grundsätzlich besteht jedoch auch die Möglichkeit, den Keramikeinsatz 21 mehrteilig auszuführen, so dass beispielsweise die Anzahl der Benetzungsmittel 1.1 bis 1.7 variiert werden kann. Die Benetzungsmittel 1.1 bis 1.7 sind auch in diesem Ausführungsbeispiel alle identisch ausgeführt und in dem Querschnitt in Fig. 5 näher dargestellt.

Wie aus der Fig. 5 hervorgeht, weist jedes der Benetzungsmittel 1.1 bis 1.7 jeweils eine Benetzungsnut 8 und einen Dosierkanal 9 auf. Der Dosierkanal 9 mündet in einen Einlaufbereich der Benetzungsnut 8, wobei der Nutgrund 23 der Benetzungsnut 8 eine Wölbung zur Fadenführung aufweist.

Innerhalb der Trägerplatte 6 ist der Dosierkanal 9 über einen Zuführkanal 22 direkt mit einem Druckraum 10 des zugeordneten Dosiermittels 2.1 verbunden.

Die Funktion des in Fig. 4 und 5 dargestellten Ausführungsbeispiels der erfindungsgemäßen Vorrichtung ist identisch zu dem vorgennannten Ausführungsbeispiel, so dass an dieser Stelle keine weiteren Erläuterungen erfolgen.

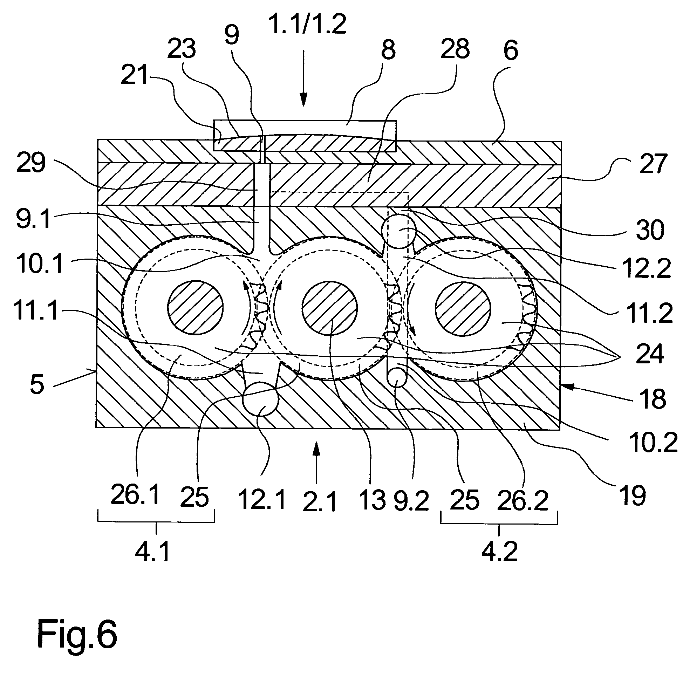

In der Fig. 6 ist ein weiteres Ausführungsbeispiel der erfindungsgemäßen Vorrichtung zum Benetzen mehrerer Fäden schematisch in einer Querschnittansicht dargestellt. Bei dem in Fig. 6 dargestellten Ausführungsbeispiel sind die Dosiermittel durch Planetenzahnradanordnungen 24 gebildet, die jeweils zwei Zahnradpaarungen 4.1 und 4.2 pro Dosiermittel aufweisen.

In Fig. 6 ist eine Querschnittsansicht des Dosiermittels 2.1 gezeigt.

Die Dosiermittel 2.1 bis 2.7 sind in einer Sandwichanordnung gehalten, wie beispielsweise in den vorgenannten Ausführungsbeispielen gezeigt und beschrieben. Insoweit wird zu der vorgenannten Beschreibung Bezug genommen.

Das Dosiermittel 2.1 weist eine Planetenzahnradanordnung 24 mit einem mittleren Sonnenrad 25 und zwei Planetenräder 26.1 und 26.2 auf, die von dem Sonnenrad 25 angetrieben werden. Das Sonnenrad 25 ist hierzu mit einer Antriebswelle 13 gekoppelt, die alle Sonnenräder der benachbarten Planetenzahnradanordnungen 24 gemeinsam antreibt. Die Antriebswelle 13 ist hierzu mit einem hier nicht dargestellten elektrischen Antrieb gekoppelt.

Innerhalb der Planetenzahnradanordnung 24 sind den Zahnradpaarungen 4.1 und 4.2 separate Druckräume 10.1 und 10.2 sowie separate Saugräume 11.1 und 11.2 zugeordnet, die über einen oder wie hier dargestellt mehreren Saugkanälen 12.1 und 12.2 mit einer Fluidquelle verbunden sind. Die Zahnräder 25, 26.1 und 26.2 sind in einer Zahnradplatte 19 integriert. Die Zahnradplatte 19 wird durch zwei hier nicht dargestellte Gehäuseplatten begrenzt. Innerhalb der Zahnradplatte 19 und in der zur Zeichnungsebene dahinter liegenden Gehäuseplatte 18 sind mehrere Dosierkanäle 9.1, 9.2 und 30 ausgebildet, die die Druckräume 10.1 und 10.2 mit mehreren Verteilernuten 28 einer Verteilerplatte 27 verbinden. Die Verteilerplatte 27 ist hierzu zwischen dem Pumpenblock 5 und einer Trägerplatte 6 angeordnet. An der Oberseite der Trägerplatte 6 sind mehrere Benetzungsmittel angeordnet, wobei dem Dosiermittel 2.1 zwei Benetzungsmittel 1.1 und 1.2 zugeordnet sind. Das Benetzungsmittel 1.1 ist unmittelbar über einen vertikalen Verteilerkanal 29 und einen vertikalen Dosierkanal 9 mit dem Druckraum 10.1 der Zahnradpaarung 4.1 verbunden. Das unmittelbar in der Zeichnungsebene dahinterliegende Benetzungsmittel 1.2 ist über Verteilernuten 28 in der Verteilplatte 27 und Dosierkanälen 9.2 und 30 in der Gehäuseplatte 18 mit dem Druckraum 10.2 der zweiten Zahnradpaarung 4.2 verbunden. So lässt sich innerhalb einer Zahnradteilung der Dosiermittel 2.1 mehrere Benetzungsmittel zum Benetzen mehrerer Fäden anordnen. Das Ausführungsbeispiel nach Fig. 6 ist daher besonders geeignet, um eine Fadenschar mit geringem Fadenabstand zwischen den Fäden gleichmäßig zu benetzen. Das Benetzungsmittel 1.1 und 1.2 sind identisch zu dem Benetzungsmittel des Ausführungsbeispiels nach Fig. 4 und 5 ausgeführt. Insoweit wird auf die vorhergehende Beschreibung Bezug genommen.

Bei den in Fig. 1 bis 6 dargestellten Ausführungsbeispielen sind insbesondere die an der Trägerplatte 6 ausgebildeten Benetzungsmittel beispielhaft. Grundsätzlich können auch sogenannte Präparationsstifte an der Trägerplatte gehalten sein, die unmittelbar den Dosiermitteln zugeordnet sind.

### Bezugszeichenliste

- 1.1 ... 1.7: Benetzungsmittel
- 2.1 ... 2.7: Dosiermittel
- 3: Dosiereinrichtung
- 4: Zahnradpaarung
- 5: Pumpenblock
- 6: Trägerplatte
- 7: Anschlussseite
- 8: Benetzungsnut
- 9: Dosierkanal
- 10: Druckraum
- 11: Saugraum
- 12: Saugkanal
- 13: Antriebswelle
- 14: Antrieb
- 15: Lagerzapfen
- 16: Antriebsrad
- 17: Treibrad
- 18: Gehäuseplatte
- 19: Zahnradplatte
- 20: Zulaufleitung
- 21: Keramikeinsatz
- 22: Zuführkanal
- 23: Nutgrund
- 24: Planetenzahnradanordnungen
- 25: Sonnenrad
- 26.1, 26.2: Planetenrad
- 27: Verteilerplatte
- 28: Verteilernut
- 29: Verteilerkanal
- 30: Dosierkanal

## Patentansprüche

1. Vorrichtung zum Benetzen mehrerer Fäden, mit mehreren Benetzungsmitteln (1.1 ... 1.7), die zum Auftragen einer dosierten Menge eines Fluids pro Faden ausgebildet sind, und mit einer Dosiereinrichtung (3), die pro Benetzungsmittel (1.1 ... 1.7) ein von mehreren Dosiermitteln (2.1 ... 2.7) aufweist, wobei die Dosiermittel (2.1 ... 2.7) mit den Benetzungsmitteln (1.1 ... 1.7) verbunden sind,
**dadurch gekennzeichnet, dass**
die Dosiermittel (2.1 ... 2.7) durch mehrere Zahnradpaarungen (4) gebildet sind, die sandwichartig in einem Pumpenblock (5) angeordnet sind, und dass die Benetzungsmittel (1.1 ... 1.7) an einer Trägerplatte (6) angeordnet sind, welche Trägerplatte (6) an dem Pumpenblock (5) gehalten ist.

2. Vorrichtung nach Anspruch 1,
**dadurch gekennzeichnet, dass**
die Benetzungsmittel (1.1 ... 1.7) mit einem Fadenabstand (F) zueinander an der Trägerplatte (6) angeordnet sind und dass die Zahnradpaarungen (4) eine gleich große Zahnbreite (2) aufweisen, die kleiner ist als der Fadenabstand (F).

3. Vorrichtung nach Anspruch 2,
**dadurch gekennzeichnet, dass**
der Fadenabstand (F) zwischen den Benetzungsmitteln (1.1 ... 1.7) eine Größe von kleiner 10 mm aufweist.

4. Vorrichtung nach einem der Ansprüche 1 bis 3,
**dadurch gekennzeichnet, dass**
die Benetzungsmittel (1.1 ... 1.7) jeweils eine Benetzungsnut (8) und einen in ein Nutgrund (23) der Benetzungsnut (8) mündenden Dosierkanal (9) aufweisen und dass der Dosierkanal (9) mit einem Druckraum (10) eines der Zahnradpaare (4) verbunden ist.

5. Vorrichtung nach Anspruch 4,
**dadurch gekennzeichnet, dass**
die Benetzungsnuten (8) und die Dosierkanäle (9) der Benetzungsmittel (1.1 ... 1.7) identisch ausgebildet sind.

6. Vorrichtung nach Anspruch 4 oder 5
**dadurch gekennzeichnet, dass**
die Benetzungsnuten (8) der Benetzungsmittel (1.1 ... 1.7) in der Trägerplatte (6) ausgebildet sind, wobei die Dosierkanäle (9) die Trägerplatte (6) bis zu einer Anschlussseite (7) des Pumpenblocks (5) durchdringen.

7. Vorrichtung nach Anspruch 4 oder 5,
**dadurch gekennzeichnet, dass**
die Benetzungsnuten (8) der Benetzungsmittel (1.1 ... 1.7) durch einen oder mehreren Keramikeinsätze (21) gebildet sind, der oder die an der Trägerplatte (6) gehalten ist oder sind, wobei die Dosierkanäle (9) innerhalb der Trägerplatte (6) durch separate Zuführkanäle (22) mit den Druckräumen (10) der Zahnradpaarungen (4) verbunden sind.

8. Vorrichtung nach einem der Ansprüche 1 bis 7,
**dadurch gekennzeichnet, dass**
die Zahnradpaarungen (4) innerhalb des Pumpenblockes (5) durch eine gemeinsame Antriebswelle (13) antreibbar ausgebildet sind.

9. Vorrichtung nach Anspruch 8,
**dadurch gekennzeichnet, dass**
die Antriebswelle (13) außerhalb des Pumpenblockes (5) mit einem elektrischen Antrieb (14) gekoppelt ist.

10. Vorrichtung nach einem der Ansprüche 1 bis 9,
**dadurch gekennzeichnet, dass**
der Pumpenblock (5) einen Saugkanal (12) aufweist, der mit mehreren den Zahnradpaarungen (4) zugeordneten Saugkammern (12) verbunden ist und der an einem Ende des Pumpenblockes (5) mit einer Zulaufleitung (20) gekoppelt ist.

11. Vorrichtung nach einem der Ansprüche 1 bis 10,
**dadurch gekennzeichnet, dass**
der Pumpenblock (5) aus mehreren Gehäuseplatten (18) und mehreren Zahnradplatten (19) gebildet ist, die druckdicht gegeneinander gehalten sind.

12. Vorrichtung nach Anspruch 1,
**dadurch gekennzeichnet, dass**
die Zahnradpaarungen durch mehrere Planetenzahnradanordnungen (24) gebildet sind, wobei eine der Planetenzahnradanordnungen (24) einem der Benetzungsmittel (1.1, 1.2) oder mehreren Benetzungsmitteln (1.1, 1.2) zugeordnet ist.

13. Vorrichtung nach Anspruch 12,
**dadurch gekennzeichnet, dass**
eine Verteilerplatte (27) mit mehreren Verteilernuten (28) zwischen dem Pumpenblock (5) und der Trägerplatte (6) angeordnet ist.

14. Vorrichtung nach Anspruch 12 oder 13,
**dadurch gekennzeichnet, dass**
die Planetenzahnradanordnungen (24) jeweils ein Sonnenrad (25) aufweisen und dass die Sonnenräder (25) gemeinsam antreibbar ausgebildet sind.

## Claims

1. A device for wetting a plurality of threads, having a plurality of wetting means (1.1 ... 1.7) which are configured for applying a metered amount of a fluid per thread and having a metering unit (3) which has one of a plurality of metering means (2.1 ... 2.7) per wetting means (1.1 ... 1.7), wherein the metering means (2.1 ... 2.7) are connected to the wetting means (1.1 ... 1.7),
**characterized in that**
the metering means (2.1 ... 2.7) are formed by a plurality of gear pairs (4) which are disposed sandwich-like in a pump block (5) and that the wetting means (1.1 ... 1.7) are disposed on a support plate (6), which support plate (6) is held on the pump block (5).

2. The device as claimed in claim 1,
**characterized in that**
the wetting means (1.1 ... 1.7) are disposed on the support plate (6) at a thread spacing (F) from one another and that the gear pairs (4) have an identical tooth width (2) which is smaller than the thread spacing (F).

3. The device as claimed in claim 2,
**characterized in that**
the thread spacing (F) between the wetting means (1.1 ... 1.7) has a dimension of less than 10 mm.

4. The device as claimed in one of claims 1 to 3, **characterized in that** the wetting means (1.1 ... 1.7) have in each case one wetting groove (8) and one metering duct (9) which opens into a groove base (23) of the wetting groove (8) and that the metering duct (9) is connected to a pressure chamber (10) of one of the gear pairs (4).

5. The device as claimed in claim 4,
**characterized in that**
the wetting grooves (8) and the metering ducts (9) of the wetting means (1.1 ... 1.7) are configured in an identical manner.

6. The device as claimed in claim 4 or 5, **characterized in that** the wetting grooves (8) of the wetting means (1.1 ... 1.7) are configured in the support plate (6), wherein the metering ducts (9) penetrate through the support plate (6) up to a connector side (7) of the pump block (5).

7. The device as claimed in claim 4 or 5, **characterized in that** the wetting grooves (8) of the wetting means (1.1 ... 1.7) are formed by one or more ceramic inserts (21) which is/are held on the support plate (6), wherein the metering ducts (9), within the support plate (6), are connected to the pressure chambers (10) of the gear pairs (4) by way of separate supply ducts (22).

8. The device as claimed in one of claims 1 to 7, **characterized in that** the gear pairs (4), within the pump block (5), are configured so as to be drivable by a common drive shaft (13).

9. The device as claimed in claim 8,
**characterized in that**
the drive shaft (13), outside the pump block (5), is coupled to an electric drive (14).

10. The device as claimed in one of claims 1 to 9, **characterized in that** the pump block (5) has a suction duct (12) which is connected to a plurality of suction chambers (12) which are assigned to the gear pairs (4) and which are, at one end of the pump block (5), coupled to a supply line (20).

11. The device as claimed in one of claims 1 to 10, **characterized in that** the pump block (5) is formed by a plurality of housing plates (18) and a plurality of gear plates (19) which are held together in a pressure-tight manner.

12. The device as claimed in claim 1,
**characterized in that**
the gear pairs are formed by a plurality of planetary gear assemblies (24), wherein one of the planetary gear assemblies (24) is assigned to one of the wetting means (1.1, 1.2) or to a plurality of wetting means (1.1, 1.2).

13. The device as claimed in claim 12,
**characterized in that**
a distributor plate (27) having a plurality of distributor grooves (28) is disposed between the pump block (5) and the support plate (6).

14. The device as claimed in claim 12 or 13, **characterized in that**
the planetary gear assemblies (24) have in each case one sun wheel (25) and that the sun wheels (25) are configured so as to be collectively drivable.

## Revendications

1. Dispositif pour mouiller plusieurs fils, comportant plusieurs moyens de mouillage (1.1 ... 1.7) qui sont conçus pour appliquer une quantité dosée d'un fluide par fil, et un dispositif doseur (3), qui par moyen de mouillage (1.1 ... 1.7) comprend un ou plusieurs moyens de dosage (2.1 ... 2.7), les moyens de dosage (2.1 ... 2.7) étant reliés aux moyens de mouillage (1.1 ... 1.7), **caractérisé en ce que** les moyens de dosage (2.1 ... 2.7) sont formés par plusieurs engrenages (4), qui sont disposés en sandwich dans un groupe générateur de pression (5), et que les moyens de mouillage (1.1 ... 1.7) sont disposés sur une plaque de support (6), la plaque de support (6) étant maintenue contre le groupe générateur de pression (5).

2. Dispositif selon la revendication 1, **caractérisé en ce que** les moyens de mouillage (1.1 ... 1.7) sont disposés contre la plaque de support (6) en faisant entre eux une distance (F) égale l'écartement des fils, et que les engrenages (4) présentent une largeur de dent (2) de même taille, qui est inférieure à la distance entre fils (F).

3. Dispositif selon la revendication 2, **caractérisé en ce que** l'écartement des fils (F) entre les agents de mouillage (1.1 ... 1.7) présente une valeur inférieure à 10 mm.

4. Dispositif selon l'une des revendications 1 à 3, **caractérisé en ce que** les agents de mouillage (1.1 ... 1.7) comprennent chacun une rainure de mouillage (8) et un canal de dosage (9) qui débouche dans un fond (23) de la rainure de mouillage (8), et que le canal de dosage (9) est relié à un espace de pression (10) de l'un des engrenages (4).

5. Dispositif selon la revendication 4, **caractérisé en ce que** les rainures de mouillage (8) et les canaux de dosage (9) des moyens de mouillage (1.1 ... 1.7) ont une configuration identique.

6. Dispositif selon la revendication 4 ou 5, **caractérisé en ce que** les rainures de mouillage (8) des moyens de mouillage (1.1 ... 1.7) sont réalisés dans la plaque de support (6), les canaux de dosage (9) pénétrant dans la plaque de support (6) jusqu'à un côté raccordement (7) du groupe générateur de pression (5).

7. Dispositif selon la revendication 4 ou 5, **caractérisé en ce que** les rainures de mouillage (8) des moyens de mouillage (1.1 ... 1.7) sont formées par un ou plusieurs inserts céramiques (21), qui sont maintenus contre la plaque de support (6), les canaux de dosage (9) étant, à l'intérieur de la plaque de support (6), reliés par des canaux d'amenée distincts (22) aux espaces de pression (10) des engrenages (4).

8. Dispositif selon l'une des revendications 1 à 7, **caractérisé en ce que** les engrenages (4) sont, à l'intérieur du groupe générateur de pression (5), conçus de façon à être actionnés par un arbre d'entraînement commun (13).

9. Dispositif selon la revendication 8, **caractérisé en ce que** l'arbre d'entraînement (13) est, à l'extérieur du groupe générateur de pression (5), couplé à un organe d'entraînement électrique (14).

10. Dispositif selon l'une des revendications 1 à 9, **caractérisé en ce que** le groupe générateur de pression (5) comprend un canal d'aspiration (12), qui est relié à plusieurs chambres d'aspiration (12) affectées aux engrenages (4), et qui à une extrémité du groupe générateur de pression (5) est couplé à une conduite d'arrivée (20).

11. Dispositif selon l'une des revendications 1 à 10, **caractérisé en ce que** le groupe générateur de pression (5) est formé de plusieurs plaques de carter (18) et de plusieurs plaques d'engrenage (19), qui sont maintenues d'une manière étanche à la pression les unes contre les autres.

12. Dispositif selon la revendication 1, **caractérisé en ce que** les engrenages sont formés de plusieurs trains planétaires (24), l'un des trains planétaires (24) étant affecté à l'un des moyens de mouillage (1.1, 1.2) ou à plusieurs moyens de mouillage (1.1, 1.2).

13. Dispositif selon la revendication 12, **caractérisé en ce qu'**une plaque de répartition (27), comportant plusieurs rainures de répartition (28), est disposée entre le groupe générateur de pression (5) et la plaque de support (6).

14. Dispositif selon la revendication 12 ou 13, **caractérisé en ce que** les trains planétaires (24) comprennent chacun un planétaire (25), et que les planétaires (25) sont conçus de façon à pouvoir être entraînés simultanément.
